# EUROPEAN PATENT SPECIFICATION

(11) **EP 2 787 417 B1**
(45) Date of publication and mention of the grant of the patent: **05.12.2018**
(21) Application number: 13162612.9
(22) Date of filing: 05.04.2013
(51) Int. Cl.: G06F 3/0354

(54) **Multi-control stylus**
Mehrfachkontrollstift
Stylet multi-commande

(43) Date of publication of application: 08.10.2014
(73) Proprietor: BlackBerry Limited, Waterloo, ON N2K 0A7 (CA)
(72) Inventor: Krete, Morley E., Waterloo, Ontario N2L 3W8 (CA)
(74) Representative: Bryn-Jacobsen, Caelia

(56) References cited:
- EP-A1- 0 836 151
- WO-A2-03/058394
- DE-A1- 3 228 968
- US-A- 4 318 096
- US-A1- 2007 268 278
- US-A1- 2008 309 621
- US-A1- 2011 157 007
- US-A1- 2012 253 699

## Description

### BACKGROUND

A stylus may be employed as a computer input device. Inputs generated by a stylus may include the x-y position of a stylus on a screen or drawing tablet and the contact force between the stylus and a surface. For instance, the x-y position may be employed to interface with a graphical user interface or a drawing application executed on a computer. The pressure applied to a stylus may be sensed by a sensor in the stylus.

An alternative computer input device is a computer mouse. A computer mouse provides x-y position input in addition to inputs from two or more buttons. The buttons may be clicked to select objects of a graphical user interface, or held down to move objects displayed on a screen or to draw lines, for example.

A stylus lacks button functions, while a computer mouse lacks the accurate positional control and force sensing of a stylus.

One prior approach to improving the functionality of a stylus is to add an axial force sensor or switch that responds to stylus contact force. However, this provides only a single control that cannot duplicate the functions of a computer mouse.

An alternative approach is to supply one or more external buttons on the housing of the stylus. However, such buttons are not readily activated while the stylus is being moved, since a user must change their grip of the stylus to activate an external button.

It would be useful to provide a stylus with multiple controls that are convenient for use.
US 2001/157007 discloses an optical pen that comprises a housing, a pen body, a pen tip, a switch and a control unit. The pen body, disposed inside the housing, has a hinge mechanism allowing the pivoting of the pen body. The pen tip is disposed at a front end of the pen body and protruded from the housing. When the pen tip touches a projection surface, the pen body is rotated through the hinge mechanism to trigger the switch. The switch disposed inside the housing is electrically connected to the control unit. When the switch is triggered, the control unit outputs an electrical signal.
US 2012/253699 discloses an input apparatus that includes a contact device that includes a shaft member, a first sensor configured to detect, when a tip of the shaft member comes into contact with a surface of a contacted object, a first force corresponding to a component of a force applied to the tip, which acts in a planar direction crossing a direction of an axis of the shaft at right angles, and a second sensor configured to detect a second force corresponding to a component of the applied force, which acts in a direction of the axis of the shaft member.
WO 03/058394 discloses a stylus computer for data entry and manipulation which is comprised of a screen configured to receive data and a stylus having a first end, configured to enter data onto the screen. When the first end of the stylus is pressed on the screen and drawn in a first direction a first sound is emitted having a first waveform, and when the first end of the stylus is drawn in a second different direction, a second sound is emitted having a second waveform different than the first waveform.
US 2008/309621 discloses an electronic device that includes a display for displaying icons selectable with use of a stylus, a stylus location determination function that determines a location of the stylus in relation to the display without necessitating that the stylus make physical contact with the display, and a highlight function, operatively coupled to the stylus location determination function, that highlights the icon associated with the location of the stylus prior to the stylus making physical contact with the display.
EP 0836151 discloses an image processing apparatus functioning as a writing device that images information as it is written on to a surface by measuring the forces applied at the stylus tip. The imaging device includes a ink pen cartridge and strain gauges mounted on a sensor that mechanically couples to the pen cartridge. The strain gauges measure lateral forces deflecting the pen cartridge, and the longitudinal forces pressing the cartridge into the pen housing. Alternatively, strain gauges can also determine the force of the pen tip against the writing surface. The gauges generate signals representative of the forces applied to the pen point as the pen moves along or presses against a writing surface. A further set of sensors can be employed to determine movement and orientation of the device relative to the surface even when the pen is not in contact with the surface. Data representative of the written images are captured by analyzing the forces applied to the pen point.
US 4,318,096 discloses a graphics input device for use with location indicating means to present graphic data upon a computer controlled visual display. The device includes a pen having a housing within which is disposed a conductive stylus shaft, one end extending beyond the housing to serve as the writing tip. A cylindrical off-axis pressure transducer encircles a portion of the stylus shaft within the housing, adjacent its writing end, for generating a variable output electrical signal proportional to the variable off-axis force applied to the stylus. Moreover, an axial pressure transducer is arranged within the housing for sensing an axial force applied to the stylus and generating a variable output electrical signal proportional to the applied axial force. A display processing and control system receives the variable signals of the off-axis and axial pressure transducers and modifies a visual characteristic of the graphic data in response thereto.
DE 3228968 discloses a writing pen for recognition of handwritten symbols. The writing pen comprises a housing, a laterally and axially displaceable, elastically suspended writing tip, a plurality of lateral switches responsive to a lateral displacement of the writing tip, and an axial switch responsive to an axial displacement of the writing tip. Signals of the lateral and axial switches are input to a handwriting recognition process executed by a processor of the writing pen.
The present invention is set out in the independent claims, with some optional features set out in the claims dependent thereto.

### BRIEF DESCRIPTION OF THE DRAWINGS

Exemplary embodiments of the present disclosure will be described below with reference to the included drawings such that like reference numerals refer to like elements and in which:
**FIG. 1** is a sectional view of a stylus, in accordance with exemplary embodiments of the present disclosure;
**FIG's 2-4** are sectional views of a stylus showing lateral switches, in accordance with exemplary embodiments of the present disclosure;
**FIG. 5** is a diagrammatic representation of a system utilizing a multi-control stylus in accordance with exemplary embodiments of the present disclosure;
**FIG. 6** is a block diagram of a stylus, in accordance with exemplary embodiments of the present disclosure; and
**FIG. 7** is a flow chart of a method of operation of a stylus, in accordance with exemplary embodiments of the disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the exemplary embodiments shown and described herein.

One aspect of the present disclosure relates to stylus having a stylus body and a tip having an internal portion constructed and arranged to permit relative lateral displacement between the internal portion of the tip and the stylus body. At least one lateral switch is positioned internal the stylus body in proximity to the internal portion of the tip. The at least one lateral switch is responsive to the relative lateral displacement between the internal portion of the tip and the stylus body. An output is configured to communicate a control signal, dependent upon a state of the at least one switch, to an external electronic device. According to the present invention, the stylus also includes an axial switch responsive to axial motion of the stylus tip relative to the stylus body, and a force sensor responsive to a force applied to the stylus tip.

In operation, the stylus provides an input to an electronic device by providing a first control signal to the electronic device in response to activation of a lateral switch or a combination of lateral switches. A lateral switch is activated by application of force to the tip of the stylus in a lateral direction. According to the present invention, the stylus provides a second control signal in response to activation of an axial switch of the stylus by an axial force applied between the tip of the stylus and the stylus body. Haptic and/or audible feedback may be provided to a user when a switch, or combination of switches, changes state.

The electronic device receives the first and/or second control signals and may use them to control selected aspects of an application executed on the processor. The electronic device may be configured to execute computer instructions stored on transient or non-transient computer readable media.

Under control of computer-executable instructions a processor of an electronic device receives first and second control signals from a stylus. The first control signal is responsive to activation of at least one switch of the stylus by relative lateral motion between a tip of the stylus a stylus body, while the second control signal is responsive to activation of an axial switch of the stylus by relative axial motion between the tip of the stylus and the stylus body. An application executed on the processor is controlled dependent upon the first and second control signals.

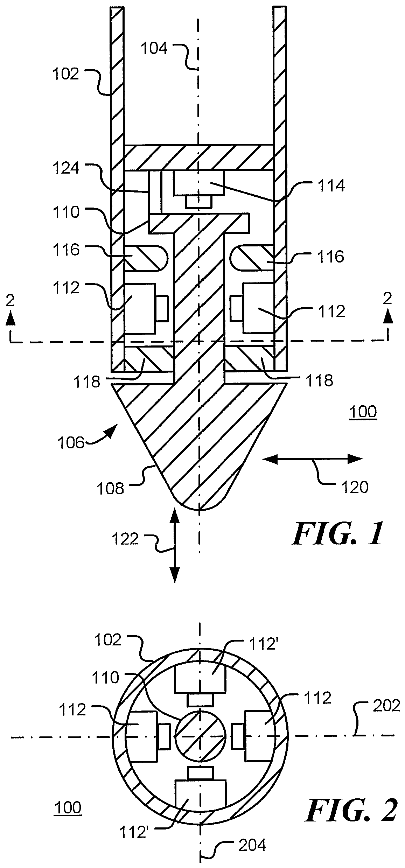

**FIG. 1** is a sectional view of stylus, in accordance with exemplary embodiments of the present disclosure. The stylus 100 has an elongated stylus body 102 having a longitudinal axis 104, and first and second lateral axes perpendicular to the longitudinal axis 104. A stylus tip 106 has an external portion 108 that extends from an end of the stylus body 102 and an internal portion 110 that is moveably located within the stylus body 102. One or more lateral switches 112 are located within the stylus body 102 and are activated by motion of the internal portion 110 of the stylus tip 106 in response to relative lateral motion between the tip 106 and the stylus body 102. The state of the one or more lateral switches 112 is communicated to an external electronic device to enable control of the electronic device. For example, a software application executed on the electronic device may be controlled by activation of the switches and by motion of the stylus tip across a surface. According to the present invention, the lateral switches 112 are configured to be insensitive to motion of the internal portion 110 of the tip 106 along the longitudinal axis 104. The stylus 100 also includes an axial switch 114 located within the stylus body 102. The axial switch 114 is activated by relative motion between the internal portion 110 of the tip 106, and the stylus body 102, along the longitudinal axis 104. In this configuration, the lateral switches 112 and the axial switch 114 are controlled independently of one another. Thus the lateral switches 112 and axial switch 114 by be used to provide similar functions to a computer mouse, enabling common mouse functions such as 'click to select' and 'hold to drag' to be performed using the stylus. For example, the axial switch 114 could be programmed to function as a left mouse button and the lateral switches 112 programmed to function, in combination, as a right mouse button.

The lateral and axial switch may comprise miniature switches, such as miniature, snap-action switches, for example. Other types of switches will be apparent to those of ordinary skill in the art and may be used without departing from the scope of the present disclosure.

The internal portion 110 of the tip 106 may be supported at support element 116. In the exemplary embodiment shown, the support element 116 allows sliding and pivoting motion of the internal portion 110 of the tip. The tip 106 is further supported by an elastic element 118. The elastic element 118 allows lateral motion of the external portion 108 of the tip 106, as indicated by arrow 120, and axial motion of the external portion 108 of the tip 106 as indicated by arrow 122. The corresponding motion of the internal portion 110 of the tip 106 causes the lateral and/or axial switches to be activated.

In some exemplary embodiments, the lateral and/or axial switches provide haptic feedback to the user when they activated or de-activated. The haptic feedback enables the user to feel when a switch has been activated or de-activated. The haptic feedback may be provided by the switches themselves or by a small shaker located in the stylus. Alternatively, or in addition, the user may be provided with an audible feedback, in the form of a 'click' for example, when a lateral or axial switch is activated or de-activated. The audible feedback may be provided by the external electronic device in response to a communicated state of the one or more lateral switches, by an acoustic source of the stylus, or by the mechanical components of the switches themselves.

According to the present invention, the stylus 100 also includes a force sensor 124 responsive to an axial force between the tip 106 and the stylus body 102 acting in the direction of the longitudinal axis 104. The force sensor 124 may be placed (as shown) in parallel with the axial switch 114, in or placed in series with the axial switch 114. The force sensor provides an output signal that is communicated to an external electronic device as an analog signal or a digital signal.

A sectional view through the section 2-2 in **FIG. 1** is shown in **FIG. 2**.

**FIG. 2** is a sectional view of a stylus 100 showing lateral switches, in accordance with exemplary embodiments of the present disclosure. In the configuration shown in **FIG. 2**, the one or more lateral switches includes first and second switches 112 diametrical opposed within the stylus body 102 and activated by lateral motion of the internal portion 110 of the tip in the direction of a first lateral axis 202, together with third and fourth switches 112' diametrical opposed within the stylus body 102 and activated by lateral motion of the internal portion 110 of the tip in the direction of a second lateral axis 204. A general motion lateral of the stylus tip may active a single switch or multiple switches. In one exemplary embodiment, the switch states are combined in a logic circuit.

It will be apparent to those of skill in the art that a different number of lateral switches may be used. For example, two orthogonal switches that operate in both push and pull modes may be used. Alternatively, three switches arrange at approximately 120° intervals around the longitudinal axis may be used. Also, in **FIG. 2**, the internal portion 110 of the tip is shown with a circular cross-section; however, other cross-section shapes, such as square, rectangular or triangular, for example, may be used without departing from the scope of the present disclosure. In the exemplary embodiment shown in **FIG. 2**, relative lateral motion between the tip 106 and the body 102 activates the switches 112.

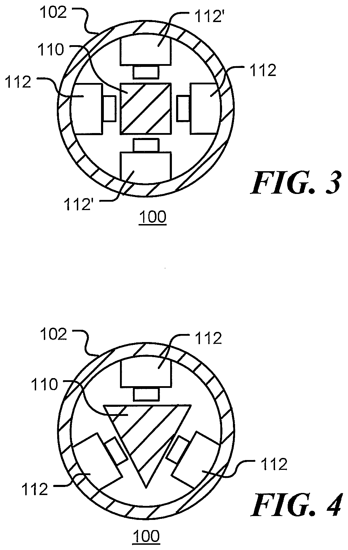

**FIG. 3** shows an exemplary embodiment in which the internal portion 110 of the tip has a square cross-section.

**FIG. 4** shows an exemplary embodiment in which the internal portion 110 of the tip has a triangular cross-section and three lateral switches 112 are used.

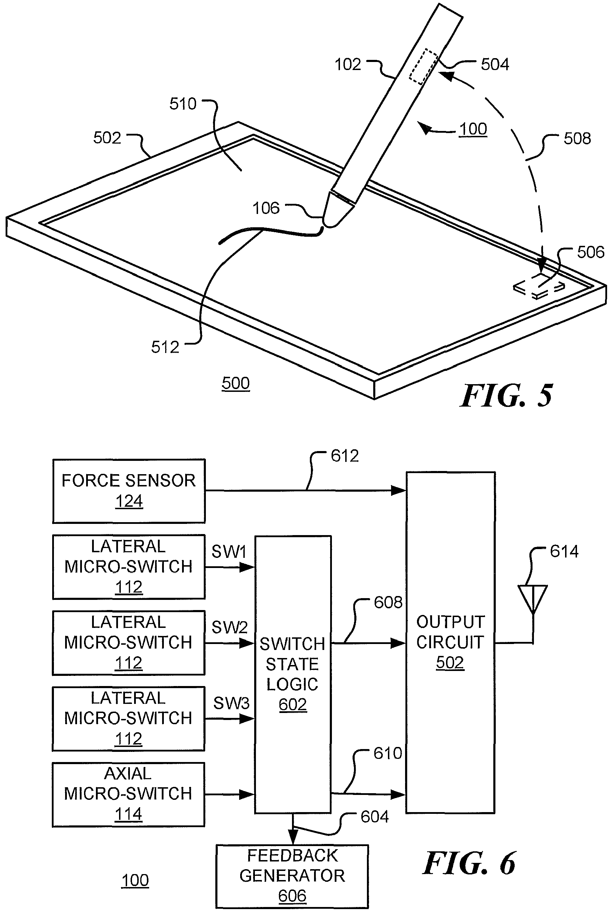

**FIG. 5** is a diagrammatic representation of a system 500 utilizing a stylus 100 in accordance with exemplary embodiments of the present disclosure. The system 500 includes a stylus 100 and a host electronic device 502. In operation, an output circuit 504 in the stylus body 102 communicates with a transceiver circuit 506 of the electronic device 502 via a wireless link 508. In an alternative embodiment, a wired link may be used. In use, the tip 106 of the stylus 100 makes contact with the display screen or drawing surface 510 of the electronic device 502. For example, the position of the tip 106 may be tracked and used to display a line 512 on the display screen. Alternatively, the position of the tip may be used to interact with a graphical user interface. The axial switch of the stylus 100 is activated by causing an axial force on the tip 106. This may be done, for example, by applying pressure when the stylus is oriented substantially perpendicular to the drawing surface or display screen 510. A lateral switch is activated by applying a lateral force to the tip 106 of the stylus. This may be done, for example, by applying pressure when the stylus at an acute angle to the display screen or drawing surface 510. The switches of the stylus 100 are used to control aspects of an application executing on the electronic device 500.

**FIG. 6** is a block diagram of a stylus 100 in accordance with exemplary embodiments of the present disclosure. The stylus 100 includes a number of lateral switches 112, an axial switch 114 and a pressure or force sensor 124. The switches are coupled to switch state logic circuit 602. In one exemplary embodiment, the switch state logic circuit 602 asserts a signal 604 to a feedback generator 606 whenever a switch, or combination of switches, is activated or de-activated. The feedback generator 606 may be a small loudspeaker or shaker or both, for example. The switch state logic circuit 602 asserts a first control signal 608 when any of the lateral switches 112 is activated and asserts a second control signal 610 when the axial switch 114 is activated. That is, the first control signal has logical value (SW1 **or** SW2 **or** SW3). A third control signal 612 is produced in response to force applied to the force sensor 124. The first control signal 608, second control signal 610 and third control signal 612 are passed to output circuit 504 to be communicated to a host electronic device. The signals may be communicated via a wireless transmitter with antenna 614, for example.

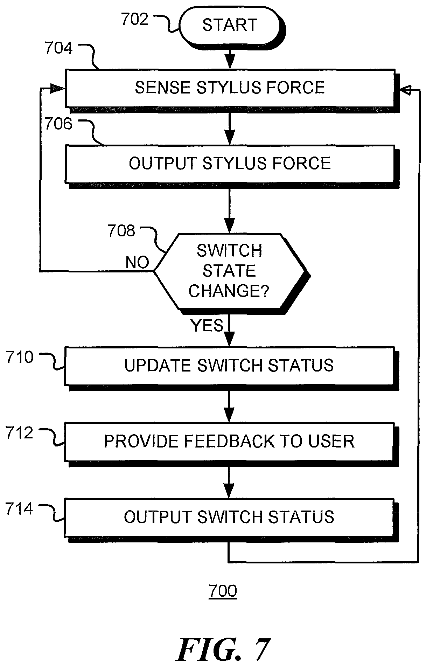

**FIG. 7** is a flow chart of a method 700 of operation of a stylus in accordance with exemplary embodiments of the disclosure. The method provides input to a host electronic device from a stylus. The stylus includes one or more lateral switches and, according to the present invention, also includes an axial switch and an axial force sensor. The stylus has a longitudinal axis and first and second lateral axes perpendicular to the longitudinal axis. Following start block 702, the axial force applied to the stylus along the longitudinal axis is sensed at block 704. At block 706, the axial force is output to the host electronic device. At decision block 708, it is determined if a change of state has occurred in a switch, or combination of switches, of the stylus. If no change of state has occurred, as depicted by the negative branch from decision block 708, flow returns to block 704. If a change of state has occurred in a switch or switch combination, as depicted by the positive branch from decision block 708, the switch status is updated at block 710. For example, a first control signal may be asserted if any of lateral switches is activated. If one lateral switch is already activated, activation of a second lateral switch may not change the status. Similarly, if two lateral switches are activated, de-activation of one switch may not cause a change in the first control signal. However, the stylus may be configured such that any change in state of the axial switch will cause a change in a second control signal.

At block 712, feedback is provided to the user to confirm that the switch status has changed. In one exemplary embodiment, the feedback in a generated by the mechanical properties of the switches themselves, as in a computer mouse button, which may produce a combination of haptic (tangible) feedback that can be felt by the user and audible feedback that can be heard by the user. In a further exemplary embodiment, the feedback is generated using one more transducers in the stylus, such as a small loudspeaker or shaker or both. The feedback for a lateral switch state change may have a different characteristic to the feedback for an axial switch state change. In a still further exemplary embodiment, an audible feedback is generated by an external electronic device in response to a signal from the stylus. At block 714 the switch status is output to the host electronic device. The output signal may comprise, for example, a first control signal indicative of the lateral switch state, a second control signal indicative of the axial switch state, and a third control signal indicative of the axial force applied to the stylus. These control signals enable control of selected aspects of the host electronic device and may be communicated over a wired or wireless communication link. Flow then returns to block 704. While the method 700 has been depicted as a serial flow in **FIG. 7**, it will be apparent to those of ordinary skill in the art that the elements may be performed in parallel or a mixture of serial and parallel elements, or may be performed in response to interrupts or events.

According to the present invention, the control signals are received by an electronic device and used to control a computer application executing on one or more processors of the electronic device. In operation, the processor receives a first and second control signals from the stylus. The first control signal is responsive to activation of one or more lateral switches of the stylus by lateral motion of a tip of the stylus, while the second control signal responsive to activation of an axial switch of the stylus by axial motion of the tip of the stylus. Dependent upon the first and second control signals, the processor controls operation of the application executed on the processor. A third control signal, responsive to axial force on the stylus is also received to provide further control of the application. Computer instructions to control the application may be stored on transient or non-transient computer readable media that can be accessed by the application. The instructions may be stored at any location, such as a local location or a location remote from the electronic device that is accessible via a network, for example. Further, the application may be executed on one or more processors remote from the electronic device.

The implementations of the present disclosure described above are intended to be merely exemplary. It will be appreciated by those of skill in the art that alterations, modifications and variations to the illustrative embodiments disclosed herein may be made without departing from the scope of the present invention as defined by the claims. Moreover, selected features from one or more of the above-described exemplary embodiments may be combined to create alternative embodiments not explicitly shown and described herein.

The present disclosure may be embodied in other specific forms. The described exemplary embodiments are to be considered in all respects only as illustrative and not restrictive. The scope of the present invention is, therefore, indicated by the appended claims rather than by the foregoing description.

## Claims

1. A stylus (100), comprising:
a stylus body (102);
a tip (106), supported by an elastic element (118) arranged to allow lateral and axial motion of an external portion (108) of the tip (106), the tip (106) having an internal portion (110) constructed and arranged to permit corresponding relative lateral displacement and corresponding relative axial displacement between the internal portion (110) of the tip (106) and the stylus body (102);
a lateral switch (112) and an axial switch (114) positioned within the stylus body (102) in proximity to the internal portion (110) of the tip (106) and responsive to the relative lateral displacement and responsive to the relative axial displacement, respectively; the lateral switch (112) and the axial switch (114) being independently controllable of one another;
a force sensor (124) responsive to an axial force acting between the tip (106) of the stylus (100) and the stylus body (102) in a direction of a longitudinal axis (104) of the stylus body (102); and
an output circuit (504) configured to communicate to an external electronic device (502) first control signal (608), dependent upon a state of the lateral switch (112), and a second control signal (610) dependent upon a state of the axial switch (114), and a third control signal (612) indicative of a sensed axial force at the force sensor (124), in which the first and second control signals (608, 610) are received by the electronic device (502) to provide control of an application executing on one or more processors of the electrotonic device (502), and wherein the third control signal (612) is received by the electronic device (502) to provide further control of the application.

2. The stylus of claim 1, wherein at least one of the lateral switch or the axial switch independently or in combination, cause haptic or audible feedback when activated or de-activated,
wherein the haptic feedback is provided by the at least one switch or a shaker located in the stylus (100), and
wherein the audible feedback is provided by the external electronic device in response to a communicated state of the lateral switch, or by an acoustic source.

3. The stylus of claim 1, wherein the lateral switch (112) comprises:
first and second lateral switches (112) diametrically opposed within the stylus body (102) and activated by lateral motion of the internal portion (110) of the tip in a direction of a first lateral axis (202) substantially perpendicular to the longitudinal axis (104) of the stylus body; and
third and fourth lateral switches (112') diametrically opposed within the stylus body (102) and activated by lateral motion of the internal portion (110) of the tip in a direction of a second lateral axis (204) substantially perpendicular to the longitudinal axis (104) of the stylus body and the first lateral axis (202).

4. A method for providing input to an electronic device (502) from a stylus (100) comprising a stylus body (102) and a tip (106), the tip (106) being supported by an elastic element (118) arranged to allow lateral and axial motion of an external portion (108) of the tip (106), the tip (106) having an internal portion (110) constructed and arranged to permit corresponding relative lateral displacement and corresponding relative axial displacement between the internal portion (110) of the tip (106) and the stylus body (102), the method comprising:
activating a lateral switch (112) located in the stylus body (102) in response to a force applied to the tip (106) of the stylus (100) in a direction of a first lateral axis (202) substantially perpendicular to a longitudinal axis (104) of the stylus body (102);
sending a first control signal (608) to the electronic device (502) in response to activating the lateral switch (112);
activating an axial switch (114) located in the stylus body (102) in response to an axial force applied to the tip (106) of the stylus (100) in a direction of the longitudinal axis (104) of the stylus body (102);
sending a second control signal (610) to the electronic device (502) in response to activating the axial switch (114);
sensing, with a force sensor (124) positioned in proximity to the internal portion (110) of the tip (106) within the stylus body (102), the axial force applied to the tip (106) of the stylus (100) in the direction of the longitudinal axis (104); and
sending a third control signal (612) indicative of the sensed axial force to the electronic device (502) in response to sensing the axial force;
wherein the lateral switch (112) and the axial switch (114) are independently controllable of one another; in which the first and second control signals (608, 610) are received by the electronic device (502) to provide control of an application executing on one or more processors of the electrotonic device (502), and wherein the third control signal (612) is received by the electronic device (502) to provide further control of the application.

5. The method of claim 4, further comprising:
providing a haptic feedback to a user of the stylus (100) in response to activating the lateral switch (112).

6. The method of claim 4 or claim 5, in which the lateral switch is one of a plurality of lateral switches.

7. The method of claim 6, further comprising:
generating a haptic feedback to a user of the stylus (100) in response to activating one or more switches of the plurality of lateral switches 112 or the axial switch (114).

8. The method of claim 6, further comprising:
generating an audible feedback to a user of the stylus (100) in response to activating one or more switches of the plurality of lateral switches (112) or the axial switch (114).

## Patentansprüche

1. Ein Stift (100), der aufweist:
einen Stiftkörper (102);
eine Spitze (106), die durch ein elastisches Element (118) unterstützt wird, das angeordnet ist, um eine seitliche und axiale Bewegung eines externen Teils (108) der Spitze (106) zuzulassen, wobei die Spitze (106) einen inneren Teil (110) hat, der konstruiert und angeordnet ist, um eine entsprechende relative seitliche Verschiebung und eine entsprechende relative axiale Verschiebung zwischen dem inneren Teil (110) der Spitze (106) und dem Stiftkörper (102) zuzulassen;
einen seitlichen Schalter (112) und einen axialen Schalter (114), die in dem Stiftkörper (102) in der Nähe des inneren Teils (110) der Spitze (106) positioniert sind und auf die relative seitliche Verschiebung beziehungsweise auf die relative axiale Verschiebung ansprechend sind;
wobei der seitliche Schalter (112) und der axiale Schalter (114) unabhängig voneinander steuerbar sind;
einen Kraftsensor (124), der auf eine zwischen der Spitze (106) des Stifts (100) und dem Stiftkörper (102) wirkende axiale Kraft in einer Richtung einer Längsachse (104) des Stiftkörpers (102) anspricht; und
eine Ausgangschaltung (504), die konfiguriert ist zum Kommunizieren, an eine externe elektronische Vorrichtung (502), eines ersten Steuersignals (608) abhängig von einem Zustand des seitlichen Schalters (112) und eines zweiten Steuersignals (610) abhängig von einem Zustand des axialen Schalters (114) und eines dritten Steuersignals (612), das eine erfasste axiale Kraft an dem Kraftsensor (124) angibt, wobei die ersten und zweiten Steuersignale (608, 610) von der elektronischen Vorrichtung (502) empfangen werden, um eine Steuerung einer Anwendung vorzusehen, die auf einem oder mehreren Prozessoren der elektronischen Vorrichtung (502) ausgeführt wird, und wobei das dritte Steuersignal (612) von der elektronischen Vorrichtung (502) empfangen wird, um eine weitere Steuerung der Anwendung vorzusehen.

2. Der Stift gemäß Anspruch 1, wobei zumindest einer des seitlichen Schalters oder des axialen Schalters, unabhängig oder in Kombination, eine haptische oder hörbare Rückmeldung bewirkt, wenn aktiviert oder deaktiviert, wobei die haptische Rückmeldung von dem zumindest einen Schalter oder einem Schüttler, der sich in dem Stift (100) befindet, vorgesehen wird, und
wobei die hörbare Rückmeldung von der externen elektronischen Vorrichtung in Reaktion auf einen kommunizierten Zustand des seitlichen Schalters oder von einer akustischen Quelle vorgesehen wird.

3. Der Stift gemäß Anspruch 1, wobei der seitliche Schalter (112) aufweist:
erste und zweite seitliche Schalter (112), die sich diametral in dem Stiftkörper (102) gegenüberliegen und durch eine seitliche Bewegung des inneren Teils (110) der Spitze in eine Richtung einer ersten seitlichen Achse (202), die im Wesentlichen senkrecht zu der Längsachse (104) des Stiftkörpers ist, aktiviert werden; und
dritte und vierte seitliche Schalter (112'), die sich diametral in dem Stiftkörper (102) gegenüberliegen und durch eine seitliche Bewegung des inneren Teils (110) der Spitze in eine Richtung einer zweiten seitlichen Achse (204), die im Wesentlichen senkrecht ist zu der Längsachse (104) des Stiftkörpers und der ersten seitlichen Achse (202), aktiviert werden.

4. Ein Verfahren zum Vorsehen einer Eingabe in eine elektronische Vorrichtung (502) von einem Stift (100), der einen Stiftkörper (102) und eine Spitze (106) aufweist, wobei die Spitze (106) durch ein elastisches Element (118) unterstützt wird, das angeordnet ist, um eine seitliche und axiale Bewegung eines externen Teils (108) der Spitze (106) zu ermöglichen, wobei die Spitze (106) einen inneren Teil (110) hat, der konstruiert und angeordnet ist, um eine entsprechende relative seitliche Verschiebung und eine entsprechende relative axiale Verschiebung zwischen dem inneren Teil (110) der Spitze (106) und dem Stiftkörper (102) zuzulassen,
wobei das Verfahren aufweist:
Aktivieren eines seitlichen Schalters (112), der sich in dem Stiftkörper (102) befindet, in Reaktion auf eine Kraft, die auf die Spitze (106) des Stifts (100) in eine Richtung einer ersten seitlichen Achse (202), die im Wesentlichen senkrecht zu einer Längsachse (104) des Stiftkörpers (102) ist, angewendet wird;
Senden eines ersten Steuersignals (608) an die elektronische Vorrichtung (502) in Reaktion auf das Aktivieren des seitlichen Schalters (112);
Aktivieren eines axialen Schalters (114), der sich in dem Stiftkörper (102) befindet, in Reaktion auf eine axiale Kraft, die auf die Spitze (106) des Stifts (100) in eine Richtung der Längsachse (104) des Stiftkörpers (102) angewendet wird;
Senden eines zweiten Steuersignals (610) an die elektronische Vorrichtung (502) in Reaktion auf das Aktivieren des axialen Schalters (114);
Erfassen, mit einem Kraftsensor (124), der in der Nähe des inneren Teils (110) der Spitze (106) in dem Stiftkörper (102) positioniert ist, der axialen Kraft, die auf die Spitze (106) des Stifts (100) in der Richtung der Längsachse (104) angewendet wird; und
Senden eines dritten Steuersignals (612), das die erfasste axiale Kraft angibt, an die elektronische Vorrichtung (502) in Reaktion auf das Erfassen der axialen Kraft;
wobei der seitliche Schalter (112) und der axiale Schalter (114) unabhängig voneinander steuerbar sind; wobei die ersten und zweiten Steuersignale (608, 610) von der elektronischen Vorrichtung (502) empfangen werden, um eine Steuerung einer Anwendung vorzusehen, die auf einem oder mehreren Prozessoren der elektronischen Vorrichtung (502) ausgeführt wird, und wobei das dritte Steuersignal (612) von der elektronischen Vorrichtung (502) empfangen wird, um eine weitere Steuerung der Anwendung vorzusehen.

5. Das Verfahren gemäß Anspruch 4, das weiter aufweist:
Vorsehen einer haptischen Rückmeldung an einen Benutzer des Stifts (100) in Reaktion auf das Aktivieren des seitlichen Schalters (112).

6. Das Verfahren gemäß Anspruch 4 oder Anspruch 5, wobei der seitliche Schalter einer aus einer Vielzahl von seitlichen Schaltern ist.

7. Das Verfahren gemäß Anspruch 6, das weiter aufweist:
Erzeugen einer haptischen Rückmeldung für einen Benutzer des Stifts (100) in Reaktion auf ein Aktivieren eines oder mehrerer Schalter der Vielzahl von seitlichen Schaltern 112 oder des axialen Schalters (114).

8. Das Verfahren gemäß Anspruch 6, das weiter aufweist:
Erzeugen einer hörbaren Rückmeldung für einen Benutzer des Stifts (100) in Reaktion auf ein Aktivieren eines oder mehrerer Schalter der Vielzahl von seitlichen Schaltern (112) oder des axialen Schalters (114).

## Revendications

1. Stylet (100), comprenant :
un corps de stylet (102) ;
une extrémité (106), supportée par un élément élastique (118) agencé pour permettre un mouvement axial et latéral d'une partie externe (108) de l'extrémité (106), l'extrémité (106) comportant une partie interne (110) construite et agencée pour permettre un déplacement latéral relatif correspondant et un déplacement axial relatif correspondant entre la partie interne (110) de l'extrémité (106) et le corps de stylet (102) ;
un commutateur latéral (112) et un commutateur axial (114) positionnés au sein du corps de stylet (102) à proximité de la partie interne (110) de l'extrémité (106) et réagissant au déplacement latéral relatif et réagissant au déplacement axial relatif, respectivement ; le commutateur latéral (112) et le commutateur axial (114) étant aptes à être commandés indépendamment l'un de l'autre ;
un capteur de force (124) réagissant à une force axiale agissant entre l'extrémité (106) du stylet (100) et le corps de stylet (102) dans une direction d'un axe longitudinal (104) du corps de stylet (102) ; et
un circuit de sortie (504) configuré pour communiquer à un dispositif électronique externe (502) un premier signal de commande (608), en fonction d'un état du commutateur latéral (112), et un deuxième signal de commande (610), en fonction d'un état du commutateur axial (114), et un troisième signal de commande (612) indiquant une force axiale détectée au niveau du capteur de force (124), dans lequel les premier et deuxième signaux de commande (608, 610) sont reçus par le dispositif électronique (502) pour permettre de commander une application s'exécutant sur un ou plusieurs processeurs du dispositif électronique (502), et le troisième signal de commande (612) étant reçu par le dispositif électronique (502) pour permettre une commande supplémentaire de l'application.

2. Stylet selon la revendication 1, dans lequel au moins le commutateur latéral ou le commutateur axial, indépendamment ou conjointement, provoque un retour d'information sonore ou haptique lorsque activé ou désactivé,
le retour d'information haptique étant fourni par l'au moins un commutateur ou un agitateur situé dans le stylet (100), et
le retour d'information sonore étant fourni par le dispositif électronique externe en réponse à un état communiqué du commutateur latéral ou par une source acoustique.

3. Stylet selon la revendication 1, dans lequel le commutateur latéral (112) comprend :
des premier et deuxième commutateurs latéraux (112) diamétralement opposés au sein du corps de stylet (102) et activés par le mouvement latéral de la partie interne (110) de l'extrémité dans une direction d'un premier axe latéral (202) sensiblement perpendiculaire à l'axe longitudinal (104) du corps de stylet ; et
des troisième et quatrième commutateurs latéraux (112') diamétralement opposés au sein du corps de stylet (102) et activés par le mouvement latéral de la partie interne (110) de l'extrémité dans une direction d'un deuxième axe latéral (204) sensiblement perpendiculaire à l'axe longitudinal (104) du corps de stylet et au premier axe latéral (202).

4. Procédé pour permettre la saisie dans un dispositif électronique (502) depuis un stylet (100) comprenant un corps de stylet (102) et une extrémité (106), l'extrémité (106) étant supportée par un élément élastique (118) agencé pour permettre le mouvement axial et latéral d'une partie externe (108) de l'extrémité (106), l'extrémité (106) comportant une partie interne (110) construite et agencée pour permettre un déplacement latéral relatif correspondant et un déplacement axial relatif correspondant entre la partie interne (110) de l'extrémité (106) et le corps de stylet (102),
le procédé consistant à :
activer un commutateur latéral (112) situé dans le corps de stylet (102) en réponse à une force appliquée sur l'extrémité (106) du stylet (100) dans une direction d'un premier axe latéral (202) sensiblement perpendiculaire à un axe longitudinal (104) du corps de stylet (102) ;
envoyer un premier signal de commande (608) au dispositif électronique (502) en réponse à l'activation du commutateur latéral (112) ;
activer un commutateur axial (114) situé dans le corps de stylet (102) en réponse à une force axiale appliquée sur l'extrémité (106) du stylet (100) dans une direction de l'axe longitudinal (104) du corps de stylet (102) ;
envoyer un deuxième signal de commande (610) au dispositif électronique (502) en réponse à l'activation du commutateur axial (114) ;
détecter, au moyen d'un capteur de force (124) placé à proximité de la partie interne (110) de l'extrémité (106) au sein du corps de stylet (102), une force axiale appliquée sur l'extrémité (106) du stylet (100) dans la direction de l'axe longitudinal (104) ;
et
envoyer un troisième signal de commande (612) indiquant la force axiale détectée au dispositif électronique (502) en réponse à la détection de la force axiale ;
le commutateur latéral (112) et le commutateur axial (114) étant aptes à être commandés indépendamment l'un de l'autre ; les premier et deuxième signaux de commande (608, 610) étant reçus par le dispositif électronique (502) pour permettre de commander une application s'exécutant sur un ou plusieurs processeurs du dispositif électronique (502), et le troisième signal de commande (612) étant reçu par le dispositif électronique (502) pour permettre une commande supplémentaire de l'application.

5. Procédé selon la revendication 4, consistant, en outre, à :
fournir un retour d'information haptique à un utilisateur du stylet (100) en réponse à l'activation du commutateur latéral (112).

6. Procédé selon la revendication 4 ou la revendication 5, dans lequel le commutateur latéral est l'un d'une pluralité de commutateurs latéraux.

7. Procédé selon la revendication 6, consistant, en outre, à :
fournir un retour d'information haptique à un utilisateur du stylet (100) en réponse à l'activation d'un ou de plusieurs commutateurs de la pluralité de commutateurs latéraux (112) ou du commutateur axial (114).

8. Procédé selon la revendication 6, consistant, en outre, à :
fournir un retour d'information sonore à un utilisateur du stylet (100) en réponse à l'activation d'un ou de plusieurs commutateurs de la pluralité de commutateurs latéraux (112) ou du commutateur axial (114).
